# EUROPÄISCHE PATENTSCHRIFT

(11) **EP 2 297 489 B1**
(45) Veröffentlichungstag und Bekanntmachung des Hinweises auf die Patenterteilung: **26.09.2012**
(21) Anmeldenummer: 09761505.8
(22) Anmeldetag: 12.06.2009
(51) Int. Cl.: F16J 9/20, F16J 9/22

(54) **VERFAHREN ZUR STABILISIERUNG EINES KOLBENRINGS SOWIE MITTEL ZUR DURCHFÜHRUNG DIESES VERFAHRENS UND VERWENDUNG DESSELBEN**
METHOD FOR STABILIZING A PISTON RING AND MEANS FOR CARRYING OUT SAID METHOD AND USE OF SAME
PROCÉDÉ DE STABILISATION D'UN SEGMENT DE PISTON AINSI QUE MOYEN DE MISE EN OEUVRE ET UTILISATION DE CE PROCÉDÉ

(30) Priorität: 12.06.2008 DE 102008028052
(43) Veröffentlichungstag der Anmeldung: 23.03.2011
(73) Patentinhaber: MAN DIESEL & TURBO, FILIAL AF MAN DIESEL & TURBO SE, TYSKLAND, 2450 København SV (DK)
(72) Erfinder: MEIER, Jørgen, DK-4000 Roskilde (DK)
(74) Vertreter: Munk, Ludwig Hubert
(86) Internationale Anmeldenummer: PCT/EP2009/004225
(87) Internationale Veröffentlichungsnummer: WO 2009/149942

(56) Entgegenhaltungen:
- DE-A1- 10 118 910
- US-A- 3 831 952
- US-A- 6 131 503
- US-A1- 2006 266 322

## Beschreibung

Die Erfindung betrifft gemäß einem ersten Erfindungsgedanken ein Verfahren zur Stabilisierung mindestens eines Kolbenrings, der mit radialem und axialem Spiel in einer zugeordneten Kolbenringnut eines Kolbens einer Hubkolbenbrennkraftmaschine aufnehmbar ist, wobei der Kolbenring mit seiner radial äußeren Umfangsfläche an der Lauffläche einer den Kolben aufnehmenden Zylinderbüchse zur Anlage bringbar und an seiner radial inneren Umfangsfläche mit dem an seiner Oberseite anstehenden Gasdruck beaufschlagbar ist und wobei der Querschnitt des Kolbenrings und/ oder der Kolbenringnut so gestaltet ist, dass im unbelasteten oder wenig durch obenseitigen Gasdruck belasteten, vergleichsweise kalten Zustand die Unterseite des Kolbenrings die gegenüberliegende untere Stützfläche der zugeordneten Kolbenringnut in einem der Kolbenachse zugewandten Bereich der Unterseite des Kolbenrings kontaktiert und von hier ausgehend ein in radialer Richtung nach radial außen in der Höhe sich öffnender Spalt zwischen der Unterseite des Kolbenrings und der gegenüberliegenden, unteren Stützfläche der Kolbenringnut gebildet wird.

Die Erfindung betrifft ferner Mittel zur Durchführung des oben genannten Verfahrens in Form einer Vorrichtung.

Während des Betriebs werden die Kolben von Hubkolbenbrennkraftmaschinen im Bereich ihrer äußeren, der Brennkammer benachbarten Oberfläche mit Wärme beaufschlagt und im Bereich ihrer inneren Oberfläche durch ein zirkuliertes Kühlmittel gekühlt. Dabei ergeben sich Bereiche unterschiedlicher Temperatur. Diese Temperaturunterschiede führen zu Wärmedeformationen des Kolbens, wobei die umlaufende Wand nach innen konkav deformiert wird, so dass jede Kolbenringnut, die im unteren Bereich des Kolbens positioniert ist, zur Zylinderwand hin schräg nach oben verläuft. Dabei ergibt sich bei der bisherigen Bauweise von Kolbenring und Kolbenringnut, d.h. bei rechteckförmigen Querschnitten von Kolbenring und Kolbenringnut, eine Situation derart, dass der einer nach außen oben schräg geneigten Kolbenringnut zugeordnete Kolbenring auf dem die der Zylinderwand benachbarte Kante der Kolbenringnut bildenden Material zur Anlage kommt, so dass ein größerer Teil der Unterseite des Kolbenrings mit dem im Bereich seiner radial inneren Umfangsfläche anstehenden Gasdruck beaufschlagt wird. Aus diesem Grund wird dieser Kolbenring durch den an seiner Oberseite und radial inneren Umfangsfläche anstehenden Gasdruck nicht stabilisiert, da auch ein größerer Teil der Unterseite des Kolbenrings diesem Gasdruck ausgesetzt ist. Die fehlende Abstützung der Unterseite des Kolbenrings führt infolge der Reibung zwischen dem Kolbenring und der Oberfläche der Zylinderbüchse zu einer Verdrehung bzw. Verdrillung des Kolbenrings. Diese Verdrehung bzw. Verdrillung ist proportional zu den genannten Reibkräften. Die Folge dieser Verdrehung bzw. Verdrillung ist ein schneller Verschleiß der Kolbenringnut und dementsprechend eine kurze Lebensdauer des Kolbens, was zu hohen Instandhaltungskosten führt.

Aus der DE 101 18 910 A1 ist eine Kolbenringanordnung bekannt, bei der im unbelasteten Zustand zwischen der Unterseite des Kolbenrings und der unteren Stützfläche der Kolbenringnut ein nach radial außen in der Höhe sich öffnender Spalt vorgesehen ist. Dabei wird davon ausgegangen, dass der genannte Spalt bei warmem Kolben gleichermaßen vorhanden ist wie im kalten Zustand. Dies trifft allerdings unter Berücksichtigung der oben dargelegten durch Wärmeverzug bewirkten Formänderung des Kolbens nicht zu. Es besteht vielmehr die Gefahr, dass der im Kaltzustand vorhandene Spalt bei einer Erwärmung des Kolbens auf Betriebstemperatur verschwindet, so dass der Kolbenring durch eine von oben kommende Druckbeaufschlagung zuerst auf der radial äußeren Kante der Kolbenringnut zur Anlage kommt und sich dementsprechend die oben dargelegten Nachteile ergeben. Außerdem kann sich dabei eine Behinderung der Öffnung des Kolbenrings und damit eine Behinderung der Druckbeaufschlagung der nachfolgenden Kolbenringe ergeben. Insgesamt ergibt sich daher eine hohe Verschleißgefahr.

Die US 6 131 503 A beschreibt einen Kolben, dessen obere Kolbenringnut bei einer Erwärmung auf Betriebstemperatur so verformt wird, dass ein radial äußerer, achsferner Bereich der unteren Stützfläche der Kolbenringnut relativ zu einem radial inneren, achsnahen Bereich nach unten verlagert wird, so dass sich in radialer Richtung nach außen ein nach unten gerichtetes Gefälle der unteren Stützfläche der Kolbenringnut ergibt. Dieser Wärmeverzug des Kolbens wird hierbei dadurch ausgeglichen, dass die Kolbenringunterseite eine dem Gefälle der zugeordneten Stützfläche der Kolbenringnut des erwärmten Kolbens entsprechende Neigung aufweist und damit bei warmem Kolben spaltfrei auf der zugeordneten Stützfläche aufliegt.

Ähnliches gilt für die aus der US 2006/0 266 322 A1 entnehmbare Anordnung. Bei dem hierin beschriebenen Kolben führt der Wärmeverzug bei einer Erwärmung auf Betriebstemperatur zwar dazu, dass ein radial äußerer, achsferner Bereich der unteren Stützfläche einer Kolbenringnut relativ zu einem radial inneren, achsnahen Bereich der Kolbenringnut hochverlagert wird. Auch hier wird der Wärmeverzug jedoch dadurch ausgeglichen, dass die Unterseite des zugeordneten Kolbenrings so geneigt ist, dass der Kolbenring bei auf Betriebstemperatur erwärmtem Kolben spaltfrei auf der zugeordneten Stützfläche aufliegt.

Es ist daher die Aufgabe der vorliegenden Erfindung, die oben geschilderten Nachteile zu vermeiden und eine lange Kolben-Lebensdauer zu gewährleisten.

Zur Lösung dieser Aufgabe wird vorgeschlagen, dass bei einem Kolben, bei dem bei in nicht durch oberseitigen Gasdruck belasteten Zustand durch einen Anstieg der Temperatur vom kalten Umgebungszustand bis zur Betriebstemperatur ein radial äußerer, achsferner Bereich der unteren Stützfläche wenigstens einer Kolbenringnut des Kolbens relativ zu einem radial inneren, achsnahen Bereich hochverlagert wird, und dabei die Höhe des in radialer Richtung nach radial außen sich öffnenden Spalts zwischen der unteren Stützfläche der Kolbenringnut und der Unterseite des zugeordneten Kolbenrings gegenüber seiner Höhe im kalten Zustand reduziert wird, die Querschnitte des Kolbenrings und der Kolbenringnut zur Kompensation des bei hohen, den Betriebsbedingungen entsprechenden Temperaturen vorhandenen Wärmeverzugs des die Kolbenringnut enthaltenden Kolbenbereichs so korrespondierend gestaltet sind, dass der genannte Spalt bei nicht vom oberseitigen Gasdruck belasteten Zustand des Kolbenrings auch bei erhöhter Temperatur des Kolbens in radialer Richtung nach außen geöffnet ist und dass der Querschnitt der Kolbenringnut so gestaltet ist, dass der Kolbenring unabhängig von jeder Art von Temperatur und Verzug der mit ihrer Form den genannten Spalt definierenden Elemente an seiner radial inneren Umfangsfläche mit dem an seiner Oberseite anstehenden Gasdruck beaufschlagt wird.

Diese Maßnahmen stellen sicher, dass auch bei ungünstigen Rahmenbedingungen, beispielsweise bei Kolben mit hoher Kolbenkrone und am unteren Rand des Kolbenhemds vorgesehenen Kolbenringnuten, bei denen ein Wärmeverzug dazu führen kann, dass die Kolbenringnuten im warmen Zustand nach radial außen ansteigend verlaufen, im Falle einer Druckbeaufschlagung des Kolbenrings von oben der Anfangskontakt zwischen der Unterseite des Kolbenrings und der gegenüberliegenden, unteren Stützfläche der Kolbenringnut zumindest in einem der Kolbenachse zugewandten Bereich der Unterseite des Kolbenrings beginnt und ein Reiten des Kolbenrings auf der radial äußeren Kante der unteren Stützfläche der Kolbenringnut verhindert wird. Der von oben mit Gasdruck beaufschlage Kolbenring wird sich daher von der ersten Kontaktstelle ausgehend nach und nach an die untere Stützfläche der Kolbenringnut anlegen, so dass unabhängig von der Temperatur sichergestellt ist, dass der Gasdruck von oben auf die komplette Druckfläche wirkt und so die Unterseite des Kolbenrings gegenüber der unteren Stützfläche der Kolbenringnut stabilisiert wird. Dadurch, dass dafür Sorge getragen wird, dass der zwischen der Unterseite des Kolbenrings und der gegenüberliegenden unteren Stützfläche der zugeordneten Kolbenringnut gebildete Spalt unter keinen Umständen nach radial innen öffnet, sondern immer nach radial außen, kann die Kolbenringnut in vorteilhafter Weise auch in axialer Richtung groß genug sein, um in jedem Fall eine Druckbeaufschlagung der radial inneren Umfangsfläche des Kolbenrings mit dem an der Kolbenringoberseite anstehenden Druck zu gewährleisten und damit eine zuverlässige Öffnung des Kolbenrings sicherzustellen.

Vorteilhaft wird der Anfangskontakt zwischen der Unterseite des Kolbenrings und der gegenüberliegenden, unteren Stützfläche der Kolbenringnut im Bereich der radial inneren Kante des Kolbenrings hergestellt. Hierdurch wird sichergestellt, dass kein Teil der Unterseite des Kolbenrings mit dem an der Oberseite und radial inneren Umfangsfläche anstehenden Gasdruck beaufschlagt wird, so dass sich eine sehr zuverlässige Stabilisierung des Kolbenrings ergibt.

Eine weitere vorteilhafte Maßnahme kann darin bestehen, dass der Anstieg der Unterseite des Kolbenrings größer als der Anstieg der nach oben geneigten, unteren Stützfläche der zugeordneten Kolbenringnut des verformten Kolbens ist. Hierdurch wird sichergestellt, dass der Anfangskontakt zwischen der Unterseite des Kolbenrings und der unteren Stützfläche der zugeordneten Kolbenringnut stets in der gewünschten Weise stattfindet.

Eine weitere vorteilhafte Ausgestaltung der übergeordneten Maßnahmen kann darin bestehen, dass die Unterseite des Kolbenrings und vorzugsweise auch die untere Stützfläche der Kolbenringnut zumindest im Bereich ihrer radial inneren Kante bzw. Kanten armiert ist bzw. sind.

Weitere vorteilhafte Ausgestaltungen und zweckmäßige Fortbildungen der übergeordneten Maßnahmen ergeben sich aus der nachstehenden Beschreibung eines Ausführungsbeispiels anhand der Zeichnung.

In der Zeichnung zeigen:
- Figur 1: einen Kolben mit hoher Kolbenkrone,
- Figur 2: einen Querschnitt der Kolbenkrone des Kolbens gemäß Figur 1,
- Figur 3: die Einzelheit III von Figur 2 in vergrößerter Darstellung,
- Figur 4: einen Ausschnitt aus einem Zylinder- Kolben- Aggregat bekannter Bauweise mit undeformiertem Kolben,
- Figur 5: die Anordnung gemäß Figur 4 mit deformiertem Kolben,
- Figur 6: einen Ausschnitt eines erfindungsgemäßen Zylinder-Kolben-Aggregats mit undeformiertem Kolben und
- Figur 7: die Anordnung gemäß Figur 6 mit deformiertem Kolben.

Hauptanwendungsgebiet der Erfindung sind Großmotoren, insbesondere Zweitakt-Großdieselmotoren, wie sie üblicherweise als Schiffsantriebe oder Antriebe großer stationärer Kraftwerke Verwendung finden. Eine Beschränkung ist hiermit jedoch nicht vorhanden. Motoren der genannten Art enthalten normalerweise mehrere Zylinder, von denen jeder einen Kolben enthält, der eine zugeordnete Brennkammer begrenzt, die in der Regel von unten nach oben längsgespült wird. Der Kolben wird dabei beim Abwärtshub durch den Verbrennungsdruck, beim Aufwärtshub durch den Verdichtungsdruck von oben beaufschlagt, so dass während jeder Längsbewegung des Kolbens an diesem ein oberseitiger Gasdruck ansteht.

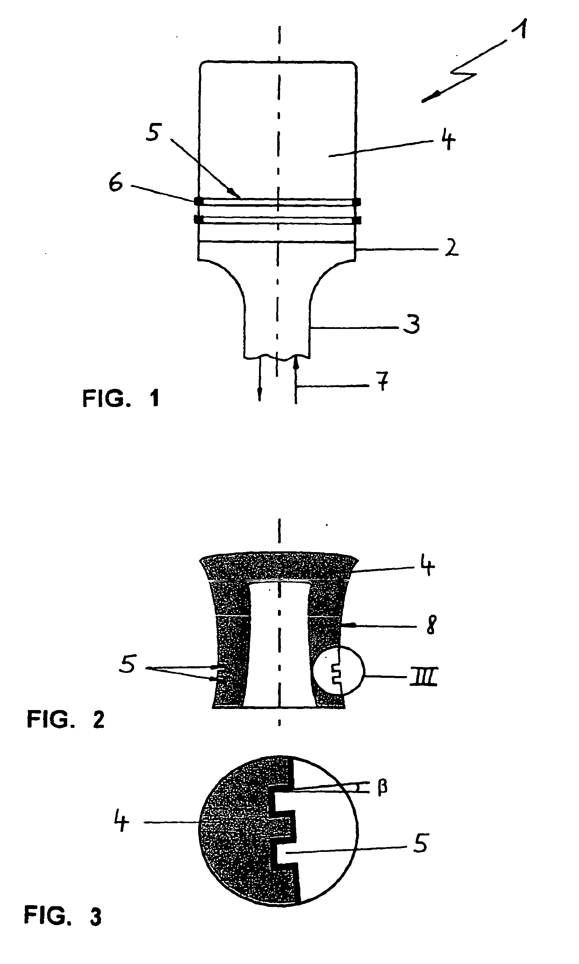

Die Kolben haben dabei meistens eine hohe Kolbenkrone (high top land type). Ein derartiger Kolben 1 ist in Figur 1 dargestellt. Der Kolben 1 enthält ein Unterteil 2, das im dargestellten Beispiel am oberen Ende einer Kolbenstange 3 angeordnet ist, und ein als Kolbenkrone 4 bezeichnetes Oberteil, das am Unterteil 2 befestigt ist. "High top land" bedeutet, dass die Kolbenkrone 4 gegenüber dem Unterteil 2 vergleichsweise hoch ist. Im dargestellten Beispiel besteht die Kolbenkrone 4 aus einem Teil. Es wäre aber auch denkbar, mehrere Teile zur Bildung der Kolbenkrone 4 aneinander anzusetzen. Die Kolbenkrone 4 ist mit wenigstens einer Kolbenringnut 5 versehen, die als Aufnahme für einen zugeordneten Kolbenring 6 dient. Im dargestellten Beispiel ist eine Anordnung mit mehreren Kolbenringnuten 5 und einer entsprechenden Anzahl von Kolbenringen 6 vorgesehen, die ein sog. Kolbenringpaket bilden. Die Kolbenringnut 5 bzw. -nuten sind im unteren Bereich des Kolbenhernds, d.h. im der unteren Kante der Kolbenkrone 4 benachbarten Bereich vorgesehen. Sofern die Kolbenkrone 4 aus mehreren Bauteilen aufgebaut wird, können die Kolbenringnuten 5 einem Bauteil oder mehreren Bauteilen zugeordnet sein.

Der der Figur 1 zugrundeliegende Kolben 1 gehört zu einem Kreuzkopf-Motor, wobei der Kolben 1 über die Kolbenstange 3 mit einem zugeordneten Kreuzkopf verbunden ist, der über eine Pleuelstange mit einer Kurbelwelle zusammenwirkt. Die Erfindung ist jedoch nicht auf diese Bauweise beschränkt, wenn gleich hierin ein Hauptanwendungsgebiet liegt. Die erfindungsgemäßen Maßnahmen können auch bei Kolben Verwendung finden, die über eine angelenkte Pleuelstange direkt mit der Kurbelwelle zusammenwirken.

Im Betrieb wird die Oberseite der Kolbenkrone 4 durch die in der von der Kolbenkrone 4 begrenzten Brennkammer stattfindende Verbrennung mit Wärme beaufschlagt. Gleichzeitig wird die Kolbenkrone 4 von innen gekühlt. Die Innenseite der Kolbenkrone 4 wird hierzu mit einem wärmeabführenden Kühlmittel beaufschlagt. Der Kolben 1 kann hierzu mit einer Kühleinrichtung 7 versehen sein, die in Figur 1 durch eine Versorgungsleitung und Entsorgungsleitung für ein geeignetes zirkuliertes Kühlmittel wie Öl oder Wasser angedeutet ist.

Diese Beaufschlagung mit Wärme und mit Kühlmittel führt zu Bereichen mit unterschiedlichen Temperaturen im die Kolbenkrone 4 bildenden Material. Die Folge davon ist, dass sich eine Wärmedeformation der Kolbenkrone 4 ergibt, wie in Figur 2 gezeigt ist. Die Kolbenkrone 4 ist dabei so verformt, dass ihre umlaufende Wand 8 konkav nach innen gebogen ist. Dies führt dazu, dass der näher bei der Kolbenachse liegende Bereich der im unteren Bereich der Kolbenkrone 4 vorgesehenen Kolbenringnut 5 bzw. Kolbenringnuten 5 gegenüber dem von der Kolbenachse in radialer Richtung weiter entfernt liegenden Nutbereich tiefer liegt. Das bedeutet, dass ein radial äußerer, achsferner Bereich der unteren Stützfläche der Kolbenringnut 5 relativ zu einem radial inneren, achsnahen Bereich der unteren Stützfläche der Kolbenringnut 5 hochverlagert ist. Aus diesem Grund sind die Kolbenringnut 5 bzw. Kolbenringnuten 5, die im unteren Bereich der Kolbenkrone 4 angeordnet sind, und hiermit insbesondere auch deren untere Stützfläche bzw. Stützflächen so orientiert, dass sie von radial innen nach radial außen ansteigend geneigt sind, wie in Figur 3 durch den Winkel β angedeutet ist.

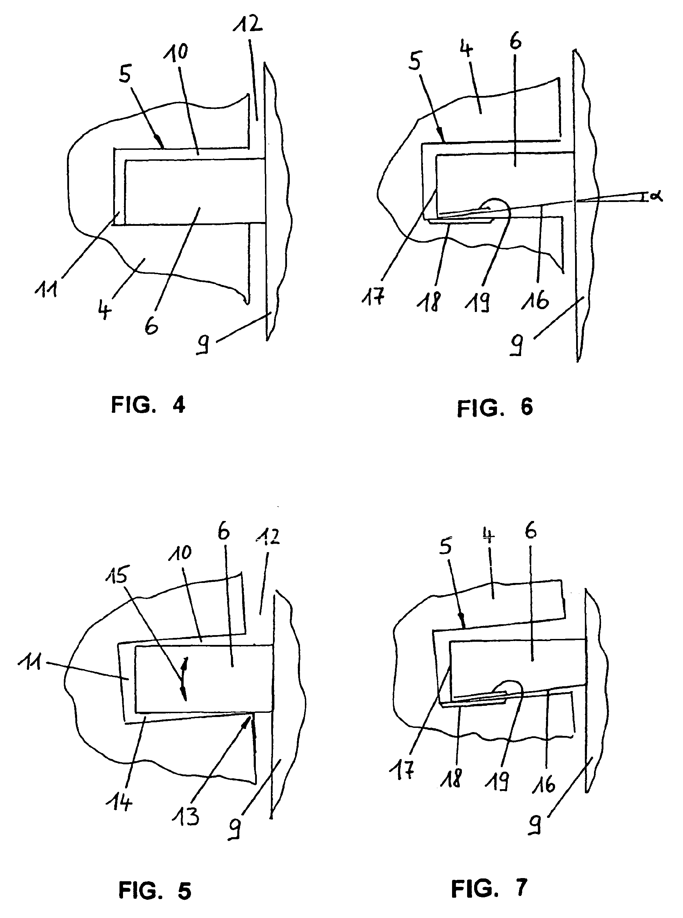

Der Querschnitt der Kolbenringnut 5 bzw. -nuten 5 ist so gestaltet, dass der jeweils zugeordnete Kolbenring 6 unabhängig von jeder Art von Temperatur und Verzug der zusammenwirkenden Teile an seiner radial inneren Umfangsfläche mit dem an seiner Oberseite anstehenden Gasdruck beaufschlagt wird, so dass ihre äußere Umfangsfläche zuverlässig die Innenseite der Zylinderbüchse 9 kontaktiert. Die Kolbenringe 6 sind hierzu, wie aus den Figuren 4 bis 7 ersichtlich ist, mit radialem und axialem Spiel in der jeweils zugeordneten Kolbenringnut 5 angeordnet. Oberhalb und hinter jedem Kolbenring 6 sind dementsprechend Spalte 10, 11 vorgesehen, die miteinander und mit einem umfangsseitigen, zwischen der Umfangsfläche der Kolbenkrone 4 und der Lauffläche der Zylinderbüchse 9 vorgesehenen Spalt 12 kommunizieren. Der Spalt 12 kommuniziert seinerseits mit der durch die Oberseite des Kolbens 1 begrenzten Brennkammer, so dass der in der Brennkammer vorhandene Druck im Spalt 12 und auch in den Spalten 10, 11 aufgebaut wird. Der unterste Kolbenring eines Kolbenringpakets kann dabei als dichter Kolbenring mit einander überlappenden Enden ausgebildet sein. Die darüber sich befindenden Kolbenringe sind zweckmäßig als geschlitzte Kolbenringe ausgebildet.

Bei den bekannten, in den Figuren 4 und 5 dargestellten Anordnungen hat der Kolbenring 6 einen achssymetrischen Rechteckquerschnitt. Dasselbe gilt für die Kolbenringnut 5 bei Umgebungstemperatur, d.h. bei unterhalb der Betriebstemperatur liegender Temperatur, wobei die Kolbenkrone 4 nicht verformt ist, wie in Figur 4 gezeigt ist.

Figur 5 zeigt die deformierte Kolbenkrone 4 bei Betriebstemperatur, wobei die Kolbenringnut 5 von radial innen nach radial außen ansteigend geneigt ist, wie oben bereits erwähnt wurde. In dieser Situation wird der bei oberseitiger Druckbelastung nach unten bewegte Kolbenring 6 zuerst durch die der Zylinderbüchse 9 zugewandte Kante 13 der zugeordneten Kolbenringnut 5 abgestützt, d.h. der Kolbenring 6 reitet dabei auf der radial äußeren Kante 13 der Kolbenringnut 5, wobei sich unterhalb der Unterseite des Kolbenrings 6 ein Spalt 14 ergibt, der mit den Spalten 11, 10, 12 kommuniziert, so dass auch ein größerer Teil der Unterseite des Kolbenrings 6 dem Verdichtungs- oder Verbrennungsdruck in der Brennkammer ausgesetzt ist. Die fehlende Abstützung der Unterseite des Kolbenrings 6 führt zu einer Verdrehung oder Verdrillung des Kolbenrings 6, wie in Figur 5 durch einen Doppelpfeil 15 angedeutet ist, und diese Verdrehung bzw. Verdrillung führt zu einem schnellen Verschleiß des die Kante 13 der Kolbenringnut 5 bildenden Materials.

Um Erscheinungen oben genannter Art zu vermeiden, werden für den Kolbenring 6 und die Kolbenringnut 5 solche geometrischen Verhältnisse vorgesehen, dass auch bei erhöhter Temperatur kein Spalt 14 vorstehend beschriebener Art zwischen der unteren Stützfläche der Kolbenringnut 5 und der Unterseite des zugeordneten, nicht durch oberseitigen Gasdruck belasteten Kolbenrings 6 entsteht und dass bei einer Belastung des Kolbenrings 6 durch oberseitigen Gasdruck der Anfangskontakt zwischen der Unterseite des Kolbenrings 6 und der unteren Stützfläche der Kolbenringnut 5 stets zuerst in dem einen kleineren Abstand von der Kolbenachse aufweisenden Bereich des Kolbenrings 6 erfolgt, wie anhand der Figuren 6 und 7 gezeigt wird. In keinem Fall darf unabhängig von der Temperatur des Kolbens 1 ein Spalt entstehen, der sich bei nicht von oben mit Druck beaufschlagtem Kolbenring 6 in radialer Richtung nach innen zur Kolbenachse hin öffnet. Dies gilt insbesondere für eine der Betriebstemperatur entsprechende Temperatur des Kolbens 1.

Bei dem den Figuren 6 und 7 zugrunde liegenden Ausführungsbeispiel besitzt der Kolbenring 6 einen trapezförmigen Querschnitt. Dieser Querschnitt weicht von einem achssymmetrischen Rechteckquerschnitt ab, wobei zumindest der radial innere Bereich der unteren Kante 16 des Querschnitts des Kolbenrings 6 gegenüber der radial inneren Kante 17 schräg verläuft und dabei so gegenüber der unteren Stützfläche der Kolbenringnut 5 um einen Winkel α geneigt ist, dass sich ein schräger Anstieg nach radial außen, hier von der radial inneren Kante ausgehend nach radial außen ergibt, wie Figur 6 erkennen lässt. Im dargestellten Ausführungsbeispiel erstreckt sich der geneigte Bereich der unteren Kante 16 über die ganze Breite des Kolbenrings 6, so dass sich ein stetiger Anstieg der Unterseite des Kolbenrings 6 von radial innen nach radial außen ergibt. Der erfindungsgemäße Kolbenring 6 ist daher im Bereich seiner radial inneren Kante dicker als im Bereich seiner radial äußeren Kante. Diese Dickendifferenz kann 1 bis 5 % betragen. Üblicherweise reichen 1 - 2% aus, so dass dies zu bevorzugen ist.

Der oben genannte Anstieg der Unterseite des Kolbenrings 6 ist jedenfalls nicht kleiner, vorzugsweise aber größer als der Anstieg der unteren Stützfläche der Kolbenringnut 5 der deformierten Kolbenkrone 4. Zu diesem Zweck ist der in Figur 6 angedeutete Winkel α in der Regel größer als der in Figur 3 angedeutete Winkel β, so dass auch bei Betriebsbedingungen, d.h. bei verformter Kolbenkrone 4, der Anfangskontakt zwischen der geneigten Unterseite des Kolbenrings 6 und der geneigten unteren Stützfläche der Kolbenringnut 5 stets in einem einen kleineren Abstand von der Kolbenachse aufweisenden Bereich des Kolbenrings 6, vorzugsweise an der radial inneren Kante des Kolbenrings 6, beginnt, wie in Figur 7 gezeigt ist. Durch die vorstehend beschriebene Gestaltung wird zwischen der Unterseite des Kolbenrings 6 und der gegenüberliegenden unteren Stützfläche der Kolbenringnut 5 ein in radialer Richtung nach radial außen sich öffnender Spalt gebildet, dessen lichte Höhe bei einem Anstieg der Kolbentemperatur von der Umgebungstemperatur auf Betriebstemperatur zwar abnimmt, wie ein Vergleich von Figuren 6 und 7 erkennen lässt, der aber bei unbelastetem Kolbenring 6 nicht ganz verschwinden darf.

Bei dem in den Figuren 6 und 7 dargestellten Ausführungsbeispiel ist lediglich der Kolbenring 6 mit einer geneigten Unterseite und dementsprechend mit einem trapezförmigen Querschnitt versehen. Der Querschnitt der Kolbenringnut 5 ist hier wie in Figur 6 gezeigt ist, bei unterhalb der Betriebstemperatur der Kolbenkrone 4 liegender Umgebungstemperatur rechteckförmig, d. h. es ist keine Aufweitung vorhanden. Aber anstelle einer Ausbildung des Kolbenrings 6 mit einer größeren Dicke im radial inneren Bereich als im radial äußeren Bereich könnte auch die Kolbenringnut 5 so ausgebildet sein, dass ihre lichte Weite bei unterhalb der Betriebstemperatur liegender Umgebungstemperatur im Bereich ihrer radial äußeren Kante größer als im Bereich ihrer radial inneren Kante ist. Diese Differenz in der lichten Weite könnte ebenfalls 1 - 5 %, vorzugsweise 1 - 2 % betragen, wie oben bereits für die Dickendifferenz des Kolbenrings 6 erwähnt wurde. Selbstverständlich könnten auch beide Maßnahmen, nämlich eine Abnahme der Dicke des Kolbenrings 6 und eine Zunahme der lichten Weite der Kolbenringnut 5 von radial innen nach radial außen vorgesehen sein. Die Kolbenringnut 5 kann dabei so ausgebildet sein, dass nur die untere Stützfläche nach radial außen abfallend geneigt oder beide Stützflächen (oben und unten) gegenläufig geneigt sind, so dass sich eine untere und obere Aufweitung ergibt.

Vorteilhaft kann die untere Stützfläche der Kolbenringnut 5 mit einer Armierung bzw. Panzerung 18 versehen sein, wie in den Figuren 6 und 7 ersichtlich ist. Im dargestellten Ausführungsbeispiel ist auch die Unterseite des Kolbenrings 6 mit einer Armierung bzw. Panzerung 19 versehen. Jede dieser Panzerungen kann sich über die ganze Breite der Kolbenringnut 5 bzw. des Kolbenrings 6 erstrecken. In der Regel reicht es jedoch aus, wenn lediglich der radial innere Bereich bzw. die radial inneren Bereiche der Kolbenringnut 5 und/oder des Kolbenrings 6 gepanzert ist bzw. sind, wie die Figuren 6, 7 zeigen.

Bei einem Kolbenringpaket mit mehreren Kolbenringen 6 können ein oder mehrere oder vorzugsweise alle Kolbenringe 6 in der oben beschriebenen, erfindungsgemäßen Weise stabilisiert werden. Es wäre aber auch denkbar nur einen Teil oder nur einen der Kolbenringe 6 eines Kolbenringpakets in der erfindungsgemäßen Weise zu stabilisieren und die restlichen Kolbenringe 6 bzw. einen restlichen Kolbenring 6 nicht. Ähnliches gilt natürlich auch, wenn bei einem gebauten Kolben ein Bauteil mehrere Kolbenringnuten 5 aufweist.

Die Querschnitte verschiedener Kolbenringe können erfahrungsgemäß sehr ähnlich sein, so dass eine Unterscheidung auf visuellem Wege sehr schwierig oder vielfach überhaupt nicht möglich ist. Falls eine Auswahl nötig ist, kann es daher zu einer falschen Auswahl kommen. Die Auswahl eines falschen Kolbenrings kann jedoch schwerwiegende Folgen haben. Ähnliches gilt für einen Kolben bzw. ein Kolbenbauteil mit einer Kolbenringnut Auch hier ist der Querschnitt unterschiedlicher Kolbenringnuten sehr ähnlich, so dass ebenfalls eine visuelle Auswahl nur schwierig möglich ist, so dass die Gefahr einer falschen Auswahl besteht Zweckmäßig kann daher eine kolbenringseitig und/ oder kolbenseitig und/ oder kolbenbauteilseitig angebrachte Markierung vorgesehen sein, die gespeicherte Daten zur eindeutigen Identifizierung des Kolbenrings und/ oder Kolbens und/ oder Kolbenbauteils enthält. Dabei kann es sich vorteilhaft um eine RFID-Markierung handeln.

Die Menge der anfallenden Daten, die sich in Verbindung mit der Abnahme eines Kolbenrings und/ oder Kolbens und/ oder Kolbenbauteils durch Klassifikationsgesellsschaften oder andere Organisationen, z. B. die IMO im Zusammenhang mit Umweltschutzvorschriften etc. ergeben, steigen erfahrungsgemäß immer mehr an, so dass eine Anbringung durch eine Gravur oder dergleichen sehr umständlich wäre bzw. praktisch nicht mehr möglich ist. Zweckmäßig ist die Markierung daher als kontaktlos anbringbare und/ oder lesbare Markierung ausgebildet.

Die Markierung befindet sich zweckmäßig in einem Bereich, dessen Temperatur unter Betriebsbedingungen in einem Bereich von 180°C oder darunter gehalten werden kann. Dies ist erfahrungsgemäß an der Unterseite eines Kolbenrings und/ oder eines Kolbens in Folge der dort wirksamen intensiven Kühlung der Stützfläche der zugeordneten Kolbenringnut bzw. des unteren Kolbenbereichs zu erwarten. Zweckmäßig befindet sich die Markierung daher an der Unterseite des Kolbenrings bzw. Kolbens. Zweckmäßig besitzt der die Markierung enthaltende Datenträger eine flache längliche Konfiguration, so dass eine Unterbringung in einer flachen, geschlossenen Randausnehmung des Kolbenrings bzw. Kolbens möglich ist, wodurch die gegenseitige Anlage und Abdichtung der einander berührenden Bauteile sowie die Flexibilität nicht beeinträchtigt werden. Die Platzierung der Markierung an der Kolbenunterseite hat zudem den Vorteil, dass zur Anbringung bzw. Ergänzung der Daten bzw. zum Lesen der Daten ein durch einen Spülschlitz der zugeordneten Zylinderbüchse durchführbares Beschriftungs- und/ oder Lesegerät Verwendung finden kann. Auf diese Weise ist eine Ergänzung der Daten beispielsweise nach einer Inspektion etc. auf einfache Weise möglich.

In der Regel werden bereits bei der Herstellung eines neuen Motors neue erfindungsgemäße Kolbenringe und/ oder Kolben bzw. Kolbenbauteile mit erfindungsgemäßen Kolbenringnuten verwendet. Denkbar wäre es auch, derartige Bauteile in einen gebrauchten Motor beispielsweise im Rahmen einer Wartung und/ oder Überholung etc. einzubauen, um die Qualität zu verbessern.

Vorstehend ist zwar ein bevorzugtes Ausführungsbeispiel der Erfindung näher beschrieben. Die Erfindung ist jedoch, wie oben bereits angedeutet wurde, hierauf nicht beschränkt. Diese ist in den nachstehenden Ansprüchen spezifiziert.

### Liste der Bezugsziffern

- 1: Kolben
- 2: Unterteil
- 3: Kolbenstange
- 4: Kolbenkrone
- 5: Kolbenringnut
- 6: Kolbenring
- 7: Kühleinrichtung
- 8: Umlaufende Wand
- 9: Zylinderbüchse
- 10: Oberer Spalt
- 11: Hinterer Spalt
- 12: Umfangsseitiger Spalt
- 13: Radial äußere Kante
- 14: Unterer Spalt
- 15: Verdreh- bzw. Verdrillrichtung
- 16: Untere Kante
- 17: Radial innere Kante
- 18: Panzerung
- 19: Panzerung

## Patentansprüche

1. Verfahren zur Stabilisierung eines Kolbenrings (6), der mit radialem und axialem Spiel in einer zugeordneten Kolbenringnut (5) eines Kolbens (1) einer Hubkolbenbrennkraftmaschine aufnehmbar ist, wobei der Kolbenring (6) mit seiner radial äußeren Umfangsfläche an der Lauffläche einer den Kolben (1) aufnehmenden Zylinderbüchse (9) zur Anlage bringbar und an seiner inneren Umfangsfläche mit dem an seiner Oberseite anstehenden Gasdruck beaufschlagbar ist und wobei der Querschnitt des Kolbenrings (6) und/ oder der Kolbenringnut (5) so gestaltet ist, dass in einem unbelasteten oder wenig durch oberseitigen Gasdruck belasteten, vergleichsweise kalten Zustand des Kolbenrings (6) dessen Unterseite die gegenüberliegende, untere Stützfläche der zugeordneten Kolbenringnut (5) in einem der Kolbenachse zugewandten Bereich der Unterseite des Kolbenrings (6) kontaktiert und von hier ausgehend ein in radialer Richtung nach außen in der Höhe sich öffnender Spalt zwischen der Unterseite des Kolbenrings (6) und der gegenüberliegenden, unteren Stützfläche der Kolbenringnut (5) gebildet wird, **dadurch gekennzeichnet, dass** bei einem Kolben (1), bei dem bei im nicht durch oberseitigen Gasdruck belasteten Zustand durch einen Anstieg der Temperatur vom kalten Umgebungszustand bis zur Betriebstemperatur ein radial äußerer, achsferner Bereich der unteren Stützfläche wenigstens einer Kolbenringnut (5) relativ zu einem radial inneren, achsnahen Bereich hochverlagert wird und dabei die Höhe des in radialer Richtung nach radial außen sich öffnenden Spalts zwischen der unteren Stützfläche der Kolbenringnut (5) und der Unterseite des zugeordneten Kolbenrings (6) gegenüber seiner Höhe im kalten Zustand reduziert wird, die Querschnitte des Kolbenrings (6) und der Kolbenringnut (5) zur Kompensation des bei hohen, den Betriebsbedingungen entsprechenden Temperaturen vorhandenen Wärmeverzugs des die Kolbenringnut (5) enthaltenden Kolbenbereichs so korrespondierend gestaltet sind, dass der genannte Spalt bei nicht vom oberseitigen Gasdruck belasteten Zustand des Kolbenringe (6) auch bei erhöhter Temperatur des Kolbens in radialer Richtung nach aussen hin geöffnet ist und dass der Querschnitt der Kolbenringnut (5) so gestaltet ist. dass der Kolbenring (6) unabhängig von jeder Art von Temperatur und Verzug der mit ihrer Form den genannten Spalt definierenden Elemente an seiner radial inneren Umfangsfläche mit dem an seiner Oberseite anstehenden Gasdruck beaufschlagt wird.

2. Verfahren nach Anspruch 1, **dadurch gekennzeichnet, dass** der zu stabilisierende Kolbenring (6) einem Kolben (1) einer Hubkolbenbrennkraftmaschine zugeordnet ist, die so ausgebildet ist, dass im Normalbetrieb während jeder Längsbewegung des Kolbens (1) an diesem ein oberseitiger Gasdruck ansteht.

3. Verfahren nach Anspruch 1, **dadurch gekennzeichnet, dass** mehrere Kolbenringe (6) ein und desselben Kolbens (1) stabilisiert werden.

4. Verfahren nach Anspruch 1. **dadurch gekennzeichnet, dass** nur eine Teilzahl der Kolbenringe (6) eines Kolbens (1) stabilisiert wird und dass der Kolben (1) wenigstens noch einen anderen Kolbenring aufweist.

5. Verfahren nach Anspruch 1, **dadurch gekennzeichnet, dass** der wenigstens eine, zu stabilisierende Kolbenring (6) einer Kolbenringnut (5) eines eigenen Bauteils eines Kolbens (1) zugeordnet ist.

6. Verfahren nach Anspruch 1, **dadurch gekennzeichnet, dass** der wenigstens eine, zu stabilisierende Kolbenring (6) einem Kolben (1) mit vergleichsweise hoher Kolbenkrone (4) zugeordnet ist, die wenigstens eine im Bereich ihres unteren Rands vorgesehene Kolbenringnut (5) aufweist, die bei einer Erwärmung des Kolbens (1) auf Betriebstemperatur so verformt wird, dass ein radial äußereer achsferner Bereich ihrer unteren Stützfläche relativ zu einem radial inneren, achsnahen Bereich ihrer unteren Stützfläche hochverlagert wird.

7. Verfahren nach Anspruch 1, **dadurch gekennzeichnet, dass** der Querschnitt des zumindest einen, zu stabilisierenden Kolbenrings (6) abweichend von einem achssymetrischen Rechteckquerschnitt gestaltet wird.

8. Verfahren nach Anspruch 1, **dadurch gekennzeichnet, dass** der Querschnitt der dem zumindest einen, zu stabilisierenden Kolbenring (6) zugeordneten Kolbenringnut (5) abweichend von einem achssymetrischen Rechteckquerschnitt gestaltet wird.

9. Verfahren nach Anspruch 7 oder 8, **dadurch gekennzeichnet, dass** die Querschnitte des zumindest einen, zu stabilisierenden Kolbenrings (6) und der zugeordneten Kolbenringnut (5) abweichend von achssymetrischen Recheckquerschnitten gestaltet werden.

10. Verfahren nach Anspruch 1 oder 4, **dadurch gekennzeichnet, dass** eine Vorrichtung gemäß wenigstens einem der Ansprüche 11 bis 31 Verwendung findet.

11. Vorrichtung zur Durchführung des Verfahrens nach einem der vorhergehenden Ansprüche mit einem Kolben (1) mit wenigstens einer Kolbenringnut (5), die im Falle einer Verformung des Kolbens (1) in Folge einer Erwärmung des Kolben (1) auf die Betriebstemperatur so verformt wird, dass ein radial äußerer achsferner Bereich ihrer unteren Stützfläche relativ zu einem radial inneren, achsnahen Bereich ihrer unteren Stützfläche hochverlagert wird, und mit einem der Kolbenringnut (5) zugeordneten Kolbenring (6) **dadurch gekennzeichnet, dass** sie Unterseite des Kolbenrings (6) so von radial innen nach radial außen verläuft, dass zwischen der Unterseite des Kolbenrings (6) und der unteren Stützfläche der zugeordneten Kolbenringnut (5) ein in radialer Richtung nach radial außen in der Höhe sich öffnender Spalt gebildet wird, der bei unbelastetem Kolbenring (6) unabhängig von der Temperatur des Kolbens (1) nach außen geöffnet bleibt

12. Vorrichtung nach Anspruch 11, wobei die wenigstens eine Kolbenringnut (5) im Falle einer Verformung des Kolbens (1) in Folge einer Erwärmung des Kolbens (1) auf die Betriebstemperatur von radial innen nach radial außen ansteigend verläuft, **dadurch gekennzeichnet, dass** zumindest der radial innere Bereich der Unterseite des Kolbenrings (6) so von radial innen nach radial außen ansteigt, dass zwischen der Unterseite des Kolbenrings (6) und der unteren Stützfläche der zugeordneten Kolbenringnut (5) ein in radialer Richtung nach radial außen in der Höhe sich öffnender Spalt gebildet wird, der bei unbelastetem Kolbenring (6) unabhängig von der Temperatur des Kolbens (1) nach außen geöffnet bleibt.

13. Vorrichtung nach Anspruch 11 oder 12, **dadurch gekennzeichnet, dass** zumindest der radial innere Bereich der Unterseite des Kolbenrings (6) zumindest denselben relativen Anstieg von radial innen nach radial außen aufweist wie die untere Stützfläche der zugeordneten Kolbenringnut (5) unter Betriebsbedingungen.

14. Vorrichtung nach Anspruch 13, **dadurch gekennzeichnet, dass** zumindest der radial innere Bereich der Unterseite des Kolbenrings (6) einen stärkeren relativen Anstieg von radial innen nach radial außen aufweist als die untere Stützfläche der zugeordnete Kolbenringnut (5) unter Betriebsbedingungen.

15. Vorrichtung nach Anspruch 11 oder 12, **dadurch gekennzeichnet, dass** die untere Seite des Kolbenrings (6) vom radial inneren Rand bis zum radial äußeren Rand durchgehend von radial innen nach radial außen ansteigt.

16. Vorrichtung nach Anspruch 11 oder 12, **dadurch gekennzeichnet dass** der Kolbenring (6) im Bereich seines radial inneren Rands dicker als im Bereich seines radial äußeren Rands ist.

17. Vorrichtung nach Anspruch 16, **dadurch gekennzeichnet, dass** der Kolbenring (6) im Bereich seines radial inneren Rands ein bis zwei Prozent dicker als im Bereich seines radial äußeren Rands ist.

18. Vorrichtung nach Anspruch 11 oder 12, **dadurch gekennzeichnet, dass** der Kolbenring (6) einen vierseitigen Querschnitt aufweist, dessen untere Kante zumindest gegenüber seiner radial inneren Kante schräg verläuft.

19. Vorrichtung nach Anspruch 11 oder 12, **dadurch gekennzeichnet, dass** der Kolbenring (6) einem Kolben (1) mit hoher Kolbenkrone (4) zugeordnet ist, die zumindest im Bereich ihres unteren Rands wenigstens eine dem wenigstens einen zu stabilisierenden Kolbenring (6) zugeordnete Kolbenringnut (5) aufweist und deren Umfangsfläche bei einem Anstieg der Temperatur auf Betriebstemperatur eine nach radial innen konkave Form annimmt.

20. Vorrichtung nach Anspruch 11 oder 12, **dadurch gekennzeichnet, dass** der Kolbenring (6) Teil eines Kolbenringpackets ist.

21. Vorrichtung nach Anspruch 11 oder 12, **dadurch gekennzeichnet, dass** die Unterseite des Kolbenrings (6) mit einer Panzerung (19) versehen ist, die sich zumindest über den radial inneren Bereich der Unterseite des Kolbenrings (6) erstreckt.

22. Vorrichtung nach wenigstens einem der Ansprüche 11 bis 21, **dadurch gekennzeichnet, dass** der Kolbenring (6) mittels kontaktlos erfassbarer Daten wenigstens einer kolbenringseitig vorgesehenen, vorzugsweise als RFID-Markierung ausgebildeten Markierung, die gespeicherte Daten zur eindeutigen Bestimmung des Kolbenrings (6) enthält, identifizierbar ist.

23. Vorrichtung nach Anspruch 22, **dadurch gekennzeichnet, dass** wenigstens eine kolbenringseitige Markierung mit Daten versehen ist, die spezifizierende Details zur Erkennung des betreffenden Kolbenrings (6) enthalten, wobei die Erkennungsdaten vorzugsweise auch Herstellungsdaten, Prüfdaten, Daten über zurückliegende und mögliche oder geplante zukünftige Benutzungen enthalten.

24. Vorrichtung nach Anspruch 22 oder 23, **dadurch gekennzeichnet, dass** wenigstens eine Markierung so an der Unterseite des Kolbenrings (6) platziert ist, dass sie gegenüber der Unterseite des Kolbenrings (6) nicht nach unten vorspringt und keine Unterbrechung des umlaufenden, radial inneren, der Stützfläche der zugeordneten Kolbenringnut (5) zugewandten Kontaktbereichs verursacht.

25. Vorrichtung nach einem der Ansprüch 11-24, **dadurch gekennzeichnet, dass** die wenigstens eine Kolbenringnut (5) des Kolbens (1) im Querschnitt rechteckförmig ist.

26. Vorrichtung nach einem der Ansprüche 11-24, **dadurch gekennzeichnet, dass** die wenigstens eine Kolbenringnut (5) des Kolbens (1) einen Querschnitt aufweist, der bei einer unterhalb der Betriebstemperatur des Kolbens (1) liegenden Temperatur einen von einem achssymetrischen Rechteck abweichenden Querschnitt aufweist.

27. Vorrichtung nach Anspruch 26, **dadurch gekennzeichnet, dass** die wenigstens eine Kolbenringnut (5) im Bereich ihres radial äußeren Rands eine größere lichte Höhe als im Bereich ihres radial inneren Rands aufweist.

28. Vorrichtung nach Anspruch 27, **dadurch gekennzeichnet, dass** die Differenz der lichten Höhe der Kolbenringnut (5) im Bereich ihres radial äußeren Rands gegenüber der lichten Höhe im Bereich ihres radial inneren Rands 1% bis 2% beträgt.

29. Vorrichtung nach Anspruch 25 oder 26, **dadurch gekennzeichnet, dass** der Kolben eine Anordnung von Kolbenringnuten (5) aufweist, von denen wenigsten eine Kolbenringnut (5) bei einer Erwarmung des Kolbens (1) auf Betriebstemperatur so verformt wird, dass ein radial äußerer achsferner Bereich ihrer unteren Stützfläche relativ zu einem radial inneren, achsnahen Bereich ihrer unteren Stützfläche hochverlagert wird.

30. Vorrichtung nach Anspruch 25 oder 26, **dadurch gekennzeichnet, dass** jede einem zu stabilisierenden Kolbenring (6) zugeordnete Kolbenringnut (5) zumindest im radial inneren Randbereich ihrer unteren Stützfläche mit einer Panzerung (18) versehen ist.

31. Vorrichtung nach wenigstens einem der Ansprüche 25 bis 30, **dadurch gekennzeichnet, dass** der Kolben mittels kontaktlos erfassbarer Daten wenigstens einer kolbenseitig vorgesehenen, vorzugsweise als RFID-Markierung ausgebildeten Markierung, die gespeicherte Daten zur eindeutigen Bestimmung des Kolbens (1) enthält, identifizierbar ist

## Claims

1. A method of stabilizing a piston ring (6) which is receivable with radial and axial play in an associated piston ring groove (5) of a piston (1) of a reciprocating piston internal combustion engine, which piston ring (6) can with its radially outer circumferential surface be brought into contact with the running face of a cylinder liner (9) receiving the piston (1), and can be supplied at its inner circumferential surface with the gas pressure prevailing on its upper side, with the cross section of the piston ring (6) and/or the piston ring groove (5) being designed in such a manner that, in an unloaded or by upper side gas pressure only little loaded, comparatively cold condition of the piston ring (6), the bottom side of such piston ring (6) contacts the opposite, lower support surface of the associated piston ring groove (5) in an area of the bottom side of the piston ring (6) facing the piston axis, and that, starting from this point, a gap opening upwards in a radially outward direction is formed between the bottom side of the piston ring (6) and the opposite, bottom support surface of the piston ring groove (5), **characterized in that** in a piston (1) at which in a state where it is not loaded by upper side gas pressure, due to a temperature rise from a cold ambient condition to operating temperature, a radially outer, axis distant area of the bottom support surface of at least one piston ring groove (5) is moved upwards relative to a radially inner axis close area, and thereby the height of the radially outwards opening gap between the bottom support surface of the piston ring groove (5) and the bottom side of the associated piston ring (6) is reduced relative to its height in a cold condition, the cross sections of the piston ring (6) and the piston ring groove (5), in order to compensate for the thermal distortion caused at high temperatures corresponding to the operating conditions of the piston area comprising the piston ring groove (5) are correspondingly designed in such a manner that the aforesaid gap, when the piston ring (6) is not loaded by the upper side gas pressure, is open in a radially outward direction also at an increased temperature of the piston, and that the cross section of the piston ring groove (5) is designed in such a manner that the the piston ring (6), irrespective of any temperature or distortion of the elements whose shape defines the aforesaid gap, is in its radially inner circumferential area loaded with the gas pressure prevailing on its upper side.

2. A method in accordance with Claim 1, **characterized in that** the piston ring (6) to be stabilized is associated with a piston (1) of a reciprocating piston internal combustion engine which is designed in such a manner that in normal operation during each longitudional movement of the piston (1) gas pressure is exerted on its upper side.

3. A method in accordance with Claim 1, **characterized in that** several piston rings (6) of one and the same piston (1) are stabilized.

4. A method in accordance with Claim 1, **characterized in that** only a partial number of piston rings (6) of a piston (1) is stabilized and that the piston (1) still comprises at least one other piston ring.

5. A method in accordance with Claim 1, **characterized in that** the at least one piston ring (6) to be stabilized is associated with a piston ring groove (5) of an own component of a piston (1).

6. A method in accordance with Claim 1, **characterized in that** the at least one piston ring (6) to be stabilized is associated with a piston (1) comprising a relatively high piston crown (4) which comprises at least one piston ring groove (5) provided in the region of its bottom rim, such piston ring groove (5), when the piston (1) is heated to operating temperature, being deformed in such a manner that a radially outer, axis distant area of the bottom support surface of the said piston ring groove (5) is moved upwards relative to a radially inner, axis close area of its bottom support area.

7. A method in accordance with Claim 1, **characterized in that** the cross section of the at least one piston ring (6) to be stabilized is designed in a manner deviating from an axis symmetrical rectangular cross section.

8. A method in accordance with Claim 1, **characterized in that** the cross section of the piston ring groove (5) associated with the at least one piston ring (6) to be stabilized is designed in a manner deviating from an axis symmetrical rectangular cross section.

9. A method in accordance with Claim 7 or 8, **characterized in that** the cross sections of the at least one piston ring (6) to be stabilized and the associated piston ring groove (5) are designed in a manner deviating from axis symmetrical rectangular cross sections.

10. A method in accordance with Claim 1 or 4, **characterized in that** at least one device in accordance with at least one of the Claims 11 to 31 is used.

11. A device for carrying out the method in accordance with any of the preceding claims, comprising a piston (1) with at least one piston ring groove (5) which in the event of a deformation of the piston (1) following the heating of the piston (1) to operating temperature is deformed in such a manner that a radially outward, axis distant area of its bottom support surface is moved upwards relative to a radially inner, axis close area of its bottom support area, and with a piston ring (6) associated with the piston ring groove (5), **characterized in that** the bottom side of the piston ring (6) extends from radially inwards to radially outwards in such a manner that between the bottom side of the piston ring (6) and the bottom support area of the associated piston ring groove (5) a gap is formed opening in height in a radially outward direction which in an unloaded condition of the piston ring (6) remains open towards the outside irrespective of the temperature of the piston (1).

12. A method in accordance with Claim 11, whereby the at least one piston ring groove (5) in the event of a deformation of the piston (1) following the heating of the piston (1) to operating temperature extends ascendingly from radially inwards to radially outwards, **characterized in that** at least the radially inner area of the bottom side of the piston ring (6) ascends from radially inwards to radially outwards in such a manner that between the bottom side of the piston ring (6) and the bottom support surface of the associated piston ring groove (5) a gap is formed in a radial direction opening in height in a radially outward direction which in an unloaded condition of the piston ring (6) remains open towards the outside irrespective of the temperature of the piston (1).

13. A device in accordance with Claim 11 or 12, **characterized in that** at least the radially inner area of the bottom side of the piston ring (6) exhibits at least the same relative ascent from radially inwards to radially outwards as the bottom support surface of the associated piston ring groove (5) under operating conditions.

14. A device in accordance with Claim 13, **characterized in that** at least the radially inner area of the bottom side of the piston ring (6) exhibits a greater relative ascent from radially inwards to radially outwards than the bottom support surface of the associated piston ring groove (5) under operating conditions.

15. A device in accordance with Claim 11 or 12, **characterized in that** the bottom side of the piston ring (6) continuously ascends from the radially inner rim to the radially outer rim in a direction from radially inwards to radially outwards.

16. A device in accordance with Claim 11 or 12, **characterized in that** the piston ring (6) in the area of its radially inner rim is thicker than in the area of its radially outer rim.

17. A device in accordance with Claim 16, **characterized in that** the piston ring (6) in the area of its radially inner rim is between one and two percent thicker than in the area of its radially outer rim.

18. A device in accordance with Claim 11 or 12, **characterized in that** the piston ring (6) exhibits a quadrangular cross section whose bottom edge extends angularly at least relative to its radially inner edge.

19. A device in accordance with Claim 11 or 12, **characterized in that** the piston ring (6) is associated with a piston (1) having a high piston crown (4) which at least in the area of its bottom rim comprises at least one piston ring groove (5) associated with at least one piston ring (6) to be stabilized and whose circumferential surface adopts a concave shape in a radially inward direction when the temperature rises to operating temperature.

20. A device in accordance with Claim 11 or 12, **characterized in that** the piston ring (6) is part of a piston ring package.

21. A device in accordance with Claim 11 or 12, **characterized in that** the bottom side of the piston ring (6) is provided with an armouring (19) which extends at least over the radially inner area of the bottom side of the piston ring (6).

22. A device in accordance with at least any of the Claims 11 to 21, **characterized in that** the piston ring (6) can be identified by means of contact-free data acquisition of at least one marking associated with a piston ring which marking is preferably designed as a RFID marking and contains stored data for the unmistakable determination of the piston ring (6).

23. A device in accordance with Claim 22, **characterized in that** at least one marking associated with a piston ring is provided with data which contains specifying details to recognize the corresponding piston ring (6), with such recognition data preferably also containing manufacturing data, test data and data referring to past and possible or planned future use.

24. A device in accordance with Claim 22 to 23, **characterized in that** at least one such marking is located on the bottom side of the piston ring (6) in such a manner that it does not protrude relative to the bottom side of the piston ring (6) and does not cause an interruption of the circumferential, radially inner contact area facing the support surface of the associated piston ring groove (5).

25. A device in accordance with any of the Claims 11 to 24, **characterized in that** the at least one piston ring groove (5) of the piston (1) has a rectangular cross section.

26. A device in accordance with any of the Claims 11 to 24, **characterized in that** the at least one piston ring groove (5) of the piston (1) has a cross section which in the event of a temperature of the piston (1) below the operating temperature has a cross section which deviates from an axis symmetrical rectangle.

27. A device in accordance with Claim 26, **characterized in that** the at least one piston ring groove (5) has in the area of its radially outer rim a larger clear height than in the area of its radially inner rim.

28. A device in accordance with Claim 27, **characterized in that** the difference of the clear height of the piston ring groove (5) in the area of its radially outer rim relative to the clear height in the area of its radially inner rim is within a range of between one and two per cent.

29. A device in accordance with Claim 25 or 26, **characterized in that** the piston comprises an arrangement of piston ring grooves (5) at least one of which, when heated to operating temperature, is deformed in such a manner that a radially outer axis distant area of its bottom support surface is moved upwards relative to a radially inner axis close area of its bottom support surface.

30. A device in accordance with Claim 25 or 26, **characterized in that** each piston ring groove (5) associated with a piston ring (6) to be stabilized is at least in its radially inner rim area of its bottom support surface provided with an armouring (18).

31. A device in accordance with at least one of the Claims 25 to 30, **characterized in that** the piston can be identified by means of contact-free data acquisition of at least one marking of a piston ring and preferably designed as an RFID marking which contains the stored data for the unmistakable determination of the piston (1).

## Revendications

1. Procédé de stabilisation d'un segment de piston (6) qui est apte à être reçu avec un jeu radial et axial dans une gorge annulaire de piston (5) associée d'un piston (1) d'un moteur à combustion interne à piston alternatif, ledit segment de piston (6) pouvant être mis en appui, par sa surface périphérique radialement extérieure, sur la surface de glissement d'une chemise de cylindre (9) recevant le piston (1), et pouvant être soumis, sur sa surface périphérique intérieure, à la pression de gaz régnant sur sa face supérieure, et la section du segment de piston (6) et/ou de ladite gorge annulaire de piston (5) étant réalisée de manière à ce que - dans un état non chargé ou peu chargé par la pression de gaz côté supérieur, état comparativement froid, du segment de piston (6) - la face inférieure de celui-ci entre en contact avec la face d'appui inférieure opposée de la gorge annulaire associée de piston (5) dans une zone de la face inférieure du segment de piston (6), qui est tournée vers l'axe du piston, et que, à partir de ce point, une fente qui s'ouvre en hauteur dans la direction radiale vers l'extérieur est formée entre la face inférieure du segment de piston (6) et la face d'appui inférieure opposée de la gorge annulaire de piston (5), **caractérisé par le fait que**, dans le cas d'un piston (1) dans lequel, en état non chargé par la pression de gaz côté supérieur, une zone éloignée de l'axe et radialement extérieure de la face d'appui inférieure d'au moins une gorge annulaire de piston (5) est déplacée vers le haut par rapport à une zone proche de l'axe et radialement intérieure, en raison d'une montée en température de l'état froid ambiant jusqu'à la température de service, et, ainsi, la hauteur de ladite fente existant entre la face d'appui inférieure de la gorge annulaire de piston (5) et la face inférieure du segment de piston associé (6) et s'ouvrant dans la direction radiale radialement vers l'extérieur est réduite par rapport à sa hauteur en état froid, les sections du segment de piston (6) et de la gorge annulaire de piston (5) sont réalisées, pour compenser le gauchissement dû à la chaleur de la zone de piston comprenant ladite gorge annulaire de piston (5), gauchissement qui se présente à des températures élevées correspondant aux conditions de fonctionnement, d'une manière correspondante telle que, lorsque le segment de piston (6) se trouve en état non chargé par la pression de gaz côté supérieur, ladite fente soit ouverte radialement vers l'extérieur également à une température élevée du piston et que la section de la gorge annulaire de piston (5) est réalisée de manière à ce que, indépendamment de tout type de température et de gauchissement des éléments définissant par leur forme ladite fente, le segment de piston (6) soit soumis sur sa surface périphérique radialement intérieure à la pression de gaz régnant sur sa face supérieure.

2. Procédé selon la revendication 1, **caractérisé par le fait que** le segment de piston (6) à stabiliser est associé à un piston (1) d'un moteur à combustion interne à piston alternatif qui est conçu de manière à ce que, en fonctionnement normal, durant chaque mouvement longitudinal du piston (1), une pression de gaz côté supérieur est présente sur celui-ci.

3. Procédé selon la revendication 1, **caractérisé par le fait que** plusieurs segments de piston (6) d'un même piston (1) sont stabilisés.

4. Procédé selon la revendication 1, **caractérisé par le fait que** seulement un nombre partiel des segments de piston (6) d'un piston (1) est stabilisé et que le piston (1) présente au moins encore un autre segment de piston.

5. Procédé selon la revendication 1, **caractérisé par le fait que** ledit au moins un segment de piston (6) à stabiliser est associé à une gorge annulaire de piston (5) d'un propre composant d'un piston (1).

6. Procédé selon la revendication 1, **caractérisé par le fait que** ledit au moins un segment de piston (6) à stabiliser est associé à un piston (1) ayant une couronne de piston (4) comparativement haute qui présente au moins une gorge annulaire de piston (5) laquelle est prévue au niveau de son bord inférieur et laquelle, lorsque le piston (1) s'échauffe à la température de service, est déformée de telle manière qu'une zone éloignée de l'axe et radialement extérieure de sa face d'appui inférieure soit déplacée vers le haut par rapport à une zone proche de l'axe et radialement intérieure de sa face d'appui inférieure.

7. Procédé selon la revendication 1, **caractérisé par le fait que** la section dudit au moins un segment de piston (6) à stabiliser est réalisée de manière à être différente d'une section rectangulaire symétrique par rapport à l'axe.

8. Procédé selon la revendication 1, **caractérisé par le fait que** la section de la gorge annulaire de piston (5) associée audit au moins un segment de piston (6) à stabiliser est réalisée de manière à être différente d'une section rectangulaire symétrique par rapport à l'axe.

9. Procédé selon la revendication 7 ou 8, **caractérisé par le fait que** les sections dudit au moins un segment de piston (6) à stabiliser et de la gorge annulaire de piston (5) associée sont réalisées de manière à être différentes de sections rectangulaires symétriques par rapport à l'axe.

10. Procédé selon la revendication 1 ou 4, **caractérisé par le fait qu'**au moins un dispositif selon l'une au moins des revendications 11 à 31 est mis en oeuvre.

11. Dispositif de mise en oeuvre du procédé selon l'une quelconque des revendications précédentes, avec un piston (1) ayant au moins une gorge annulaire de piston (5) qui, dans le cas d'une déformation dudit piston (1) suite à un échauffement du piston (1) à la température de service, est déformée de telle manière qu'une zone éloignée de l'axe et radialement extérieure de sa face d'appui inférieure soit déplacée vers le haut par rapport à une zone proche de l'axe et radialement intérieure de sa face d'appui inférieure, ainsi qu'avec un segment de piston (6) associé à ladite gorge annulaire de piston (5), **caractérisé par le fait que** la face inférieure du segment de piston (6) s'étend radialement de l'intérieur vers l'extérieur de telle façon qu'une fente s'ouvrant en hauteur dans la direction radiale radialement vers l'extérieur est formée entre la face inférieure du segment de piston (6) et la face d'appui inférieure de la gorge annulaire de piston (5) associée, fente qui reste ouverte vers l'extérieur indépendamment de la température du piston (1) lorsque le segment de piston (6) est non chargé.

12. Dispositif selon la revendication 11, dans lequel ladite au moins une gorge annulaire de piston (5) s'étend en montant radialement de l'intérieur vers l'extérieur dans le cas d'une déformation dudit piston (1) suite à un échauffement du piston (1) à la température de service, **caractérisé par le fait qu'**au moins la zone radialement intérieure de la face inférieure du segment de piston (6) va en montant radialement de l'intérieur vers l'extérieur de telle façon qu'une fente s'ouvrant en hauteur dans la direction radiale radialement vers l'extérieur est formée entre la face inférieure du segment de piston (6) et la face d'appui inférieure de la gorge annulaire de piston (5) associée, fente qui reste ouverte vers l'extérieur indépendamment de la température du piston (1) lorsque le segment de piston (6) est non chargé.

13. Dispositif selon la revendication 11 ou 12, **caractérisé par le fait qu'**au moins la zone radialement intérieure de la face inférieure du segment de piston (6) présente au moins la même pente montante relative, radialement de l'intérieur vers l'extérieur, que la face d'appui inférieure de la gorge annulaire de piston (5) associée, dans les conditions de fonctionnement.

14. Dispositif selon la revendication 13, **caractérisé par le fait qu'**au moins la zone radialement intérieure de la face inférieure du segment de piston (6) présente une plus forte pente montante relative, radialement de l'intérieur vers l'extérieur, que la face d'appui inférieure de la gorge annulaire de piston (5) associée, dans les conditions de fonctionnement

15. Dispositif selon la revendication 11 ou 12, **caractérisé par le fait que** la face inférieure du segment de piston (6) va en montant radialement de l'intérieur vers l'extérieur, de façon continue depuis le bord radialement intérieur jusqu'au bord radialement extérieur.

16. Dispositif selon la revendication 11 ou 12, **caractérisé par le fait que** ledit segment de piston (6) est plus épais au niveau de son bord radialement intérieur qu'au niveau de son bord radialement extérieur.

17. Dispositif selon la revendication 16, **caractérisé par le fait que** ledit segment de piston (6) présente au niveau de son bord radialement intérieur une épaisseur qui est d'un à deux pour cent plus importante que celle au niveau de son bord radialement extérieur.

18. Dispositif selon la revendication 11 ou 12, **caractérisé par le fait que** le segment de piston (6) présente une section quadrilatère dont l'arête inférieure s'étend en biais au moins par rapport à son arête radialement intérieure.

19. Dispositif selon la revendication 11 ou 12, **caractérisé par le fait que** le segment de piston (6) est associé à un piston (1) ayant une haute couronne de piston (4) qui présente, au moins au niveau de son bord inférieur, au moins une gorge annulaire de piston (5) associée audit au moins un segment de piston (6) à stabiliser, et dont la surface périphérique, lors d'une montée en température à la température de service, prend une forme concave radialement vers l'intérieur.

20. Dispositif selon la revendication 11 ou 12, **caractérisé par le fait que** ledit segment de piston (6) fait partie d'un paquet de segments de piston.

21. Dispositif selon la revendication 11 ou 12, **caractérisé par le fait que** la face inférieure du segment de piston (6) est pourvue d'un blindage (19) qui s'étend au moins sur la zone radialement intérieure de la face inférieure du segment de piston (6).

22. Dispositif selon l'une au moins des revendications 11 à 21, **caractérisé par le fait que** le segment de piston (6) peut être identifié au moyen de données saisissables sans contact, d'au moins un marquage prévu sur le segment de piston et réalisé de préférence en tant que marquage RFID qui contient des données stockées pour la détermination sans équivoque du segment de piston (6).

23. Dispositif selon la revendication 22, **caractérisé par le fait qu'**au moins un marquage présent sur le segment de piston est pourvu de données qui contiennent des détails spécifiants pour l'identification du segment de piston (6) respectif, les données d'identification contenant de préférence également des données de fabrication, des données de contrôle, des données relatives à des utilisations précédentes et possibles ou futures visées.

24. Dispositif selon la revendication 22 ou 23, **caractérisé par le fait qu'**au moins un marquage est placé sur la face inférieure du segment de piston (6) de telle manière qu'il ne fait pas saillie vers le bas par rapport à la face inférieure du segment de piston (6) et ne cause pas d'interruption de la zone de contact périphérique radialement intérieure tournée vers la face d'appui de la gorge annulaire de piston (5) associée.

25. Dispositif selon l'une quelconque des revendications 11 à 24, **caractérisé par le fait que** ladite au moins une gorge annulaire de piston (5) du piston (1) est rectangulaire en coupe transversale.

26. Dispositif selon l'une quelconque des revendications 11 à 24, **caractérisé par le fait que** ladite au moins une gorge annulaire de piston (5) du piston (1) présente une section qui, à une température inférieure à la température de service du piston (1), présente une section différente d'un rectangle symétrique par rapport à l'axe.

27. Dispositif selon la revendication 26, **caractérisé par le fait que** ladite au moins une gorge annulaire de piston (5) présente, au niveau de son bord radialement extérieur, une hauteur libre qui est supérieure à celle au niveau de son bord radialement intérieur.

28. Dispositif selon la revendication 27, **caractérisé par le fait que** la différence de la hauteur libre de la gorge annulaire de piston (5) au niveau de son bord radialement extérieur par rapport à la hauteur libre au niveau de son bord radialement intérieur est comprise entre 1 % et 2 %.

29. Dispositif selon la revendication 25 ou 26, **caractérisé par le fait que** le piston comprend un ensemble de gorges annulaires de piston (5) dont une gorge annulaire de piston (5) au moins, lorsque le piston (1) s'échauffe à la température de service, est déformée de telle manière qu'une zone éloignée de l'axe et radialement extérieure de sa face d'appui inférieure soit déplacée vers le haut par rapport à une zone proche de l'axe et radialement intérieure de sa face d'appui inférieure.

30. Dispositif selon la revendication 25 ou 26, **caractérisé par le fait que** chaque gorge annulaire de piston (5) associée à un segment de piston (6) à stabiliser est pourvue d'un blindage (18) au moins dans la zone marginale radialement intérieure de sa face d'appui inférieure.

31. Dispositif selon l'une quelconque des revendications 25 à 30, **caractérisé par le fait que** le piston peut être identifié au moyen de données saisissables sans contact, d'au moins un marquage prévu sur le piston et réalisé de préférence en tant que marquage RFID qui contient des données stockées pour la détermination sans équivoque du piston (1).
